# EUROPEAN PATENT SPECIFICATION

(11) **EP 3 123 487 B1**
(45) Date of publication and mention of the grant of the patent: **19.06.2019**
(21) Application number: 15713839.7
(22) Date of filing: 19.03.2015
(51) Int. Cl.: H01F 27/10

(54) **LIQUID-COOLED ELECTRICAL APPARATUS**
FLÜSSIGKEITSGEKÜHLTE ELEKTRISCHE VORRICHTUNG
APPAREIL ÉLECTRIQUE À REFROIDISSEMENT LIQUIDE

(30) Priority: 25.03.2014 DK 201470149
(43) Date of publication of application: 01.02.2017
(73) Proprietor: Vestas Wind Systems A/S, 8200 Aarhus N (DK)
(72) Inventor: ABEYASEKERA, Tusitha, 8200 Aarhus N (DK)
(74) Representative: Vestas Patents Department
(86) International application number: PCT/DK2015/050056
(87) International publication number: WO 2015/144177

(56) References cited:
- EP-A2- 1 592 028
- WO-A1-2013/063628
- FR-A1- 2 071 964
- JP-A- S58 139 413
- US-A- 5 682 292
- US-A1- 2009 002 110
- US-A1- 2012 262 264

## Description

The present invention relates to electrical apparatus which is cooled using liquid, and in particular to the cooling of inductors within electrical converters for use with wind turbine generators.

An inductor is typically connected between a wind turbine generator converter and the electricity grid to satisfy grid code requirements regarding power quality. The high power levels typically encountered within the relatively small volume occupied by such an inductor generate significant heat, giving rise to a requirement for a suitable cooling system. There are significant design constraints which would preclude the use of forced air cooling, and therefore liquid cooling is conventionally employed.

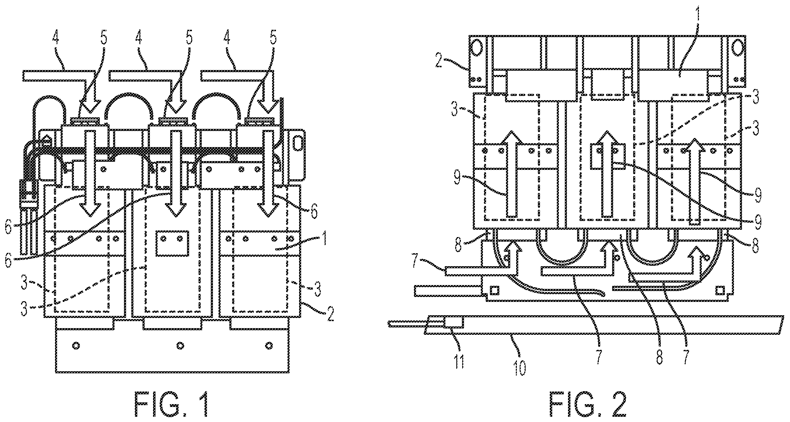

Such a system is illustrated schematically in Figure 1, in which an inductor 1 is mounted within a housing 2. The coils of the inductor 1 are cooled by means of cooling plates 3 located within the coils, and in which are formed tubular conduits (not shown). A coolant liquid is supplied to the conduits through supply pipes 4 which are connected to the conduits by means of connectors 5 mounted to the upper surface of the housing 2. The direction of flow of the coolant liquid is indicated by arrows 6. The coolant liquid flows out of the conduits through outflow pipes (not shown), which are likewise connected to the conduits by means of connectors (not shown), again mounted to the upper surface of the housing 2.

Examples of such systems are shown in WO 2013/063628, US 2009/002110 and US 5 682 292.

One problem with such a system is that, if one of the connectors 5 develops a leak, the coolant liquid will fall under gravity into the housing 2 and can come into direct contact with the windings of the inductor 1. This, in turn, can lead to a loss of reliability of the inductor 1 and possible arcing and electrical short circuits which would create a fire hazard. This is especially the case in high-power inductors used in conjunction with wind turbine generators in which the large amount of copper and other material is susceptible to fire.

It would therefore be desirable to provide arrangements which overcome, or mitigate, one or more of these disadvantages.

Thus, in accordance with a first aspect of the present invention there is provided apparatus comprising a housing containing electrical apparatus, a conduit for coolant liquid arranged within the housing and in thermal contact with the electrical apparatus, and at least one connector located on the underside of the housing for supplying coolant liquid to the conduit.

By arranging the at least one connector on the underside of the housing, any coolant liquid which leaks from the connector will fall under gravity away from the housing and cannot therefore come into contact with the inductor windings.

Furthermore, by causing the coolant liquid to flow in a rising path into the conduit, the formation of air pockets in the conduit is avoided.

An additional advantage of this arrangement is that, as the coolant is heated by the windings of the inductor 1, the coolant is caused to rise within the conduit purely as a result of convection, thereby reducing the external power required to pump the coolant liquid through the conduit.

In a preferred arrangement, the apparatus further comprises at least one connector located on the underside of the housing for removing coolant liquid from the conduit.

The apparatus further comprises means for detecting the presence of coolant liquid which has leaked from the at least one connector. This enables an indication of the leak to be provided to service personnel.

In this case, there is preferably provided a drip tray located below the housing which contains the detecting means. This enables the detecting means to be located at a height within the drip tray which is appropriate for indicating the existence of a leak.

The apparatus preferably comprises means acting in response to the detection of the presence of leaked coolant for disconnecting the electrical apparatus. This provides a safety mechanism which enables the inductor to be shut down in the event of a leak of the coolant liquid.

The present invention is particularly intended to be applied to inductors, in which case the conduit is advantageously arranged within a plate inside the windings of the inductor.

The inductor may be a grid-side inductor of a wind turbine generator.

In accordance with a further aspect of the present invention, there is provided a wind turbine generator comprising a liquid-cooled inductor within a housing, which is arranged to be cooled by means of liquid passing through a conduit within the housing which is in thermal contact with the inductor, wherein the liquid is arranged to be supplied to the conduit via one or more connectors located on the underside of the housing, wherein the wind turbine generator further comprises means for detecting the presence of coolant liquid which has leaked from the at least one connector.

In a preferred arrangement, the liquid is arranged to be removed from the conduit via one or more connectors located on the underside of the housing.

The present invention can be applied both to offshore and onshore wind turbine generators, since it would be undesirable in both situations for any coolant liquid to come into contact with the inductor windings.

A preferred embodiment of the present invention will now be described with reference to the accompanying drawings, in which:
Figure 1 is a schematic representation of a known liquid-cooled inductor; and
Figure 2 is a schematic representation of a liquid-cooled inductor in accordance with an embodiment of the present invention.

Referring to Figure 2, which uses the same reference numerals as in Figure 1 to indicate the same components, an inductor 1 is mounted within a housing 2, and the aluminium coils of the inductor 1, together with the steel core (not shown) of the inductor 1 are cooled by means of aluminium cooling plates 3 located within the coils, and in which are formed tubular conduits (not shown), as with the known arrangement of Figure 1. However, in contrast to the arrangement of Figure 1, the coolant liquid is supplied to the conduits through supply pipes 7 which are connected to the conduits by means of connectors 8 mounted underneath the housing 2. The direction of flow of the coolant liquid is indicated by arrows 9. Corresponding connectors (not shown), also mounted underneath the housing, are connected between the conduits and outflow pipes (not shown).

With this arrangement, any coolant liquid which escapes from the connectors 8 because of a leak falls under gravity.

A drip tray 10 is arranged below the housing 2 to collect any coolant liquid which may have leaked from the connectors 8, and a sensor 11 is provided within the drip tray 10 to detect the presence of liquid which has fallen into the drip tray 10. The sensor 11 generates an alarm signal in the event of a positive detection of liquid, and this is transmitted to control circuitry (not shown) which disconnects the inductor 1 from the wind turbine generator and also shuts down the generator, so that the leak can be rectified by serviced personnel.

Although the present invention has been described with reference to a preferred embodiment, it will be apparent that numerous modifications and variations may be made without departing from the scope of the invention which is defined solely by the following claims.

## Claims

1. Apparatus comprising a housing (2) containing electrical apparatus (1), a conduit for coolant liquid arranged within the housing (2) and in thermal contact with the electrical apparatus, and at least one connector (8) located on the underside of the housing arranged to supply coolant liquid to the conduit,
**characterised in that**,
said apparatus further comprises means (11) for detecting the presence of coolant liquid which has leaked from the at least one connector.

2. Apparatus as claimed in claim 1, further comprising at least one connector (8) located on the underside of the housing for removing coolant liquid from the conduit.

3. Apparatus as claimed in any preceding claim, further comprising a drip tray (10) locatable below the housing (2) which contains the detecting means.

4. Apparatus as claimed in any preceding claim, further comprising means acting in response to the detection of the presence of leaked coolant liquid for disconnecting the electrical apparatus.

5. Apparatus as claimed in any preceding claim, wherein the electrical apparatus is an inductor (1) and the conduit is arranged within a plate inside (3) the windings of the inductor.

6. Apparatus as claimed in claim 5, wherein the inductor (1) is a grid-side inductor of a wind turbine generator.

7. A wind turbine generator comprising a liquid-cooled inductor (1) within a housing (2), which is arranged to be cooled by means of liquid passing through a conduit within the housing (2) which is in thermal contact with the inductor, wherein the liquid is arranged to be supplied to the conduit via one or more connectors (8) located on the underside of the housing (2)
**characterised in that**,
said wind turbine generator further comprises means (11) for detecting the presence of coolant liquid which has leaked from the at least one connector.

8. A wind turbine generator as claimed in claim 7, wherein the liquid is arranged to be removed from the conduit via one or more connectors located on the underside of the housing.

## Patentansprüche

1. Vorrichtung, die ein Gehäuse (2) umfasst, das eine elektrische Vorrichtung (1) enthält,
eine Rohrleitung für Kühlflüssigkeit, die innerhalb des Gehäuses (2) angeordnet ist und in thermischem Kontakt mit der elektrischen Vorrichtung ist, und mindestens einen Verbinder (8), der sich auf der Unterseite des Gehäuses befindet, der dafür ausgelegt ist, Kühlflüssigkeit der Rohrleitung zuzuführen,
**dadurch gekennzeichnet, dass**
die Vorrichtung weiter Mittel (11) zum Feststellen des Vorhandenseins von Kühlflüssigkeit umfasst, die aus mindestens einem Verbinder ausgetreten ist.

2. Vorrichtung nach Anspruch 1, die weiter mindestens einen Verbinder (8) umfasst, der sich an der Unterseite des Gehäuses zum Entfernen von Kühlflüssigkeit aus der Rohrleitung befindet.

3. Vorrichtung nach einem der vorstehenden Ansprüche, die weiter eine Tropfschale (10) umfasst, die unterhalb des Gehäuses (2) positionierbar ist, die das Erfassungsmittel enthält.

4. Vorrichtung nach einem der vorstehenden Ansprüche, die weiter Mittel zum Agieren als Reaktion auf das Erfassen des Vorhandenseins von ausgetretener Kühlflüssigkeit zum Abschalten der elektrischen Vorrichtung umfasst.

5. Vorrichtung nach einem der vorherigen Ansprüche, wobei die elektrische Vorrichtung eine Spule (1) ist, und die Rohrleitung ist innerhalb einer Platte im Inneren (3) der Windungen der Spule angeordnet.

6. Vorrichtung nach Anspruch 5, wobei die Spule (1) eine netzseitige Spule einer Windkraftanlage ist.

7. Windkraftanlage, die eine flüssigkeitsgekühlte Spule (1) innerhalb eines Gehäuses (2) umfasst, die dafür ausgelegt ist, mittels Flüssigkeit gekühlt zu werden, die durch eine Rohrleitung innerhalb des Gehäuses (2) fließt, die in thermischem Kontakt mit der Spule ist, wobei die Flüssigkeit dafür ausgelegt ist, der Rohrleitung über eine oder mehrere Verbinder (8) zugeführt zu werden, die sich auf der Unterseite des Gehäuses (2) befinden,
**dadurch gekennzeichnet, dass**
die Windkraftanlage weiter Mittel (11) zum Erfassen des Vorhandenseins von Kühlflüssigkeit umfasst, die aus dem mindestens einen Verbinder ausgetreten ist.

8. Windkraftanlage nach Anspruch 7, wobei die Flüssigkeit dafür ausgelegt ist, aus der Rohrleitung über eine oder mehrere Verbinder entfernt zu werden, die sich auf der Unterseite des Gehäuses befinden.

## Revendications

1. Appareil comprenant un logement (2) contenant un appareil électrique (1), un conduit pour liquide réfrigérant agencé dans le logement (2) et en contact thermique avec l'appareil électrique et au moins un raccord (8) situé sur la face inférieure du logement agencé pour fournir du liquide réfrigérant au conduit,
**caractérisé en ce que** ledit appareil comprend en outre des moyens (11) pour détecter la présence de liquide réfrigérant qui a fui du au moins un raccord.

2. Appareil selon la revendication 1, comprenant en outre au moins un raccord (8) situé sur la face inférieure du logement pour retirer le liquide réfrigérant du conduit.

3. Appareil selon l'une quelconque des revendications précédentes, comprenant en outre un bac récepteur (10) qui peut être situé en dessous du logement (2) qui contient les moyens de détection.

4. Appareil selon l'une quelconque des revendications précédentes, comprenant en outre des moyens agissant en réponse à la détection de la présence de liquide réfrigérant qui a fui pour déconnecter l'appareil électrique.

5. Appareil selon l'une quelconque des revendications précédentes, dans lequel l'appareil électrique est un inducteur (1) et le conduit est agencé dans une plaque (3) à l'intérieur des enroulements de l'inducteur.

6. Appareil selon la revendication 5, dans lequel l'inducteur (1) est un inducteur côté réseau d'une génératrice éolienne.

7. Génératrice éolienne comprenant un inducteur refroidi par liquide (1) à l'intérieur d'un logement (2), qui est agencé pour être refroidi au moyen d'un liquide passant à travers un conduit à l'intérieur du logement (2) qui est en contact thermique avec l'inducteur, dans lequel le liquide est agencé pour être fourni au conduit via un ou plusieurs raccords (8) situés sur la face inférieure du logement (2),
**caractérisé en ce que**
ladite génératrice éolienne comprend en outre des moyens (11) pour détecter la présence de liquide réfrigérant qui a fui du au moins un raccord.

8. Génératrice éolienne selon la revendication 7, dans lequel le liquide est agencé pour être retiré du conduit via un ou plusieurs raccords situés sur la face inférieure du logement.
